# EUROPÄISCHE PATENTSCHRIFT

(11) **EP 1 845 171 B1**
(45) Veröffentlichungstag und Bekanntmachung des Hinweises auf die Patenterteilung: **14.12.2016**
(21) Anmeldenummer: 06007526.4
(22) Anmeldetag: 10.04.2006
(51) Int. Cl.: C23C 28/00, C22C 19/05, C22C 19/03

(54) **Verwendung metallischer Pulver mit unterschiedlichen Korngrössen zum Herstellen eines Schichtsystems**
Use of metallic powders having different particle sizes for forming a coating system
Utilisation de poudres métalliques ayant des particles de taille diverse pour fabriquer un système de couches

(43) Veröffentlichungstag der Anmeldung: 17.10.2007
(73) Patentinhaber: Siemens Aktiengesellschaft, 80333 München (DE)
(72) Erfinder: Stamm, Werner, Dr., 45481 Mülheim an der Ruhr (DE)

(56) Entgegenhaltungen:
- EP-A- 1 439 245
- EP-A- 1 455 003
- WO-A-99/43861
- US-A- 6 165 600
- US-A1- 2003 207 151
- US-A1- 2006 051 608

## Beschreibung

Die Erfindung betrifft die Verwendung von Pulvern zur Herstellung eines Schichtsystems gemäß dem Oberbegriff des Anspruchs 1.

Die Verwendung von Schichten zum Korrosions- und/oder Oxidationsschutz sowie zur Wärmedämmung ist im Stand der Technik bekannt. Neben dieser funktionellen Eigenschaft der Schichten ist es wichtig, dass die Schichten auch eine gute Anbindung an ein Substrat aufweisen oder dass gute Anbindungen der Schichten untereinander gegeben sind. So wird bekannter Weise eine metallische Anbindungsschicht verwendet, die zwischen dem Substrat aus einer Superlegierung und einer äußeren keramischen Wärmedämmschicht aufgebracht ist. Diese metallische Anbindungsschicht dient zur besseren Anpassung der Keramik an das metallische Substrat. Aber auch hier stellt sich die Forderung, dass die keramische Schicht eine gute Anbindung an die metallische Anbindungsschicht aufweisen muss.

WO99/43861 offenbart eine zweilagige Anbindungsschicht.

Es ist daher Aufgabe der Erfindung ein Schichtsystem aufzuzeigen, bei dem eine gute Anbindung einer keramischen Schicht oder eine gute Anbindung einer metallischen Schicht an das Substrat gegeben ist.

Die Aufgabe wird gelöst durch eine zweilagige Schicht gemäß Anspruch 1.

In den Unteransprüchen sind weitere vorteilhafte Maßnahmen aufgelistet, die beliebig miteinander kombiniert werden können, um weitere Vorteile zu erzielen.

Ausführungsbeispiele der Erfindung sind in den Figuren näher erläutert.

Es zeigen:
Figur 1 schematisch ein erfindungsgemäß hergestelltes Schichtsystem,
Figur 2 - 7 beispielhafte Korngrößenverteilungen
Figur 8 ein weiteres Ausführungsbeispiel für ein erfindungsgemäß hergestelltes Schichtsystem
Figur 9 eine Gasturbine,
Figur 10 perspektivisch eine Turbinenschaufel und
Figur 11 perspektivisch eine Brennkammer.

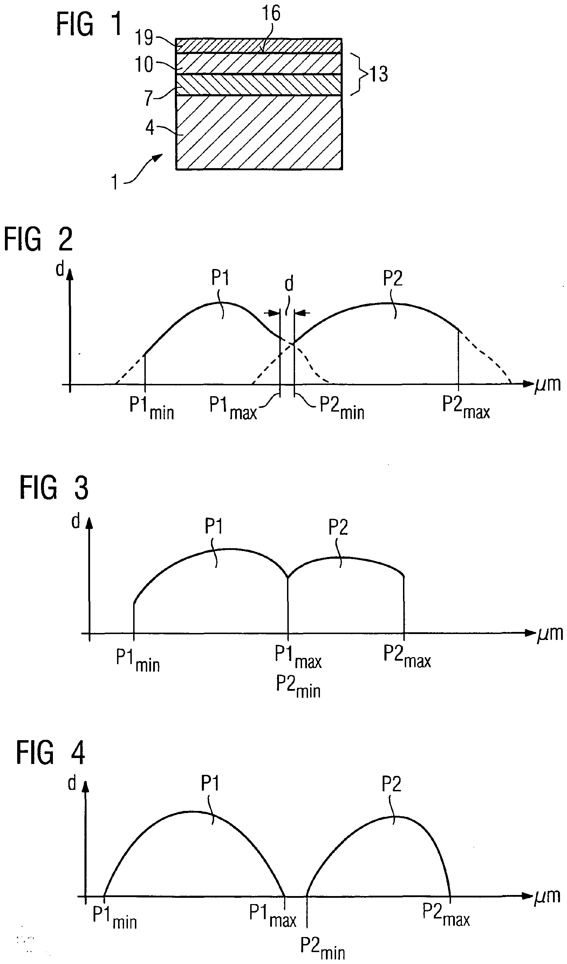

Die Figur 1 zeigt ein erfindungsgemäß hergestelltes Schichtsystem 1.

Das Schichtsystem 1 oder das Bauteil 1 besteht aus einem Substrat 4 und einer metallischen Schicht 13, die eine äußere Oberfläche 16 aufweist.

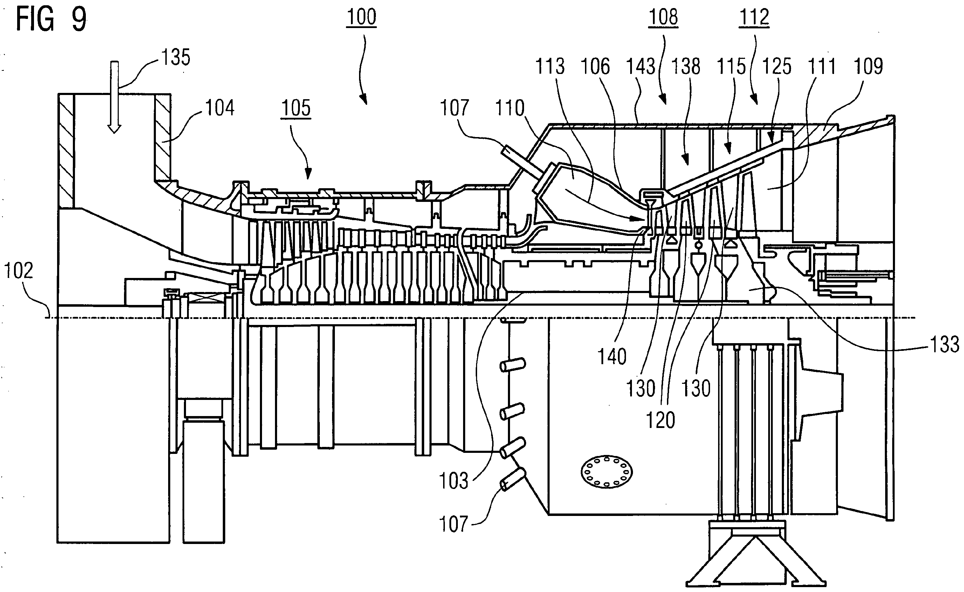

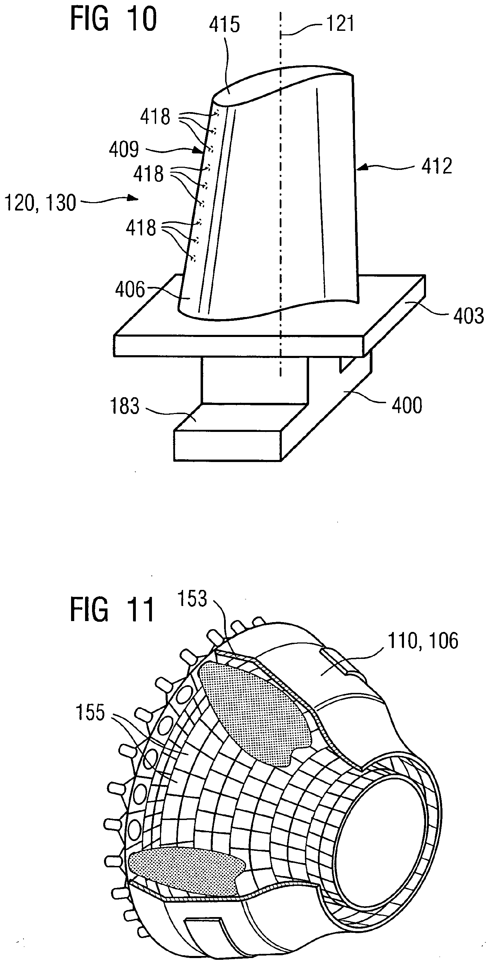

Insbesondere bei Hochtemperaturanwendungen des Bauteils 1, wie in einer Gasturbine 100 (Figur 9) oder einer Dampfturbine, besteht das Substrat 4 aus einer nickel-, kobalt- oder eisenbasierten Superlegierung und wird für Turbinenschaufeln 120, 130 (Figur 9, 10) oder Brennkammerelemente 155 (Figur 11) verwendet.

Die Schicht 13 ist erfindungsgemäß zumindest zweilagig aufgebaut.

Vorzugsweise ist die Schicht 13 nur zweilagig und weist eine innere Schicht 7 und eine äußere Schicht 10 auf.

Erfindungsgemäß weisen die Pulver für die Schichten 7, 10 unterschiedliche Korngrößenverteilungen P1, P2 auf.

Die Schicht 13 weist vorzugsweise eine homogene Zusammensetzung auf und besteht vorzugsweise aus einer MCrAlX Legierung. Auf der Schicht 13, also auf der äußeren Schicht 10 ist vorzugsweise eine keramische Schicht 19 aufgebracht.

Das Pulver für die innere Schicht 7 weist eine kleinere Korngrößenverteilung P1 als eine Korngrößenverteilung P2 des Pulvers für die äußere Schicht 10 auf.

Mit den kleineren Korngrößen des Pulvers mit der Korngrößenverteilung P1 lässt sich eine bessere Anbindung der Schicht 7, 13 an das Substrat 4 erzielen.
Jedoch wäre diese kleinere Korngrößenverteilung P1 für die gesamte Schicht 10, 13 nicht vorteilhaft für die mechanische Festigkeit, insbesondere bei hohen Temperaturen, wo ein grobkörnigeres Gefüge vorteilhaft ist.

Durch die gröbere Korngrößenverteilung P2 für die äußere Schicht 10 kann auch eine rauere Oberfläche 16 eingestellt werden, die eine gute Anbindung für eine weitere Schicht 19, insbesondere für eine keramische Schicht 19, ergibt, die vorzugsweise eine plasmagespritzte Schicht darstellt. Auch die Korrosionsbeständigkeit der äußersten Schicht 10 wird dadurch verbessert.
Da die äußere Schicht 10 beispielsweise nur zur Verbesserung der Haftung einer weiteren, vorzugsweise keramischen Schicht dient, kann diese dünn ausgeführt werden.
Insbesondere dann ist die Schichtdicke der inneren Schicht 7 dicker ausgeführt als die Schichtdicke der äußeren Schicht 10. Vorzugsweise ist die innere Schicht 7 um mindestens 100% - 200% dicker ausgebildet, als die anderen Schichten oder die äußere Schicht 10.
Vorzugsweise ist die innere Schicht 7 150µm und die äußere Schicht 10 50µm dick.

Daher wird auf die innere Schicht 7 eine äußere Schicht 10 aufgebracht, die aber im Vergleich zu der inneren Schicht 7 eine gröbere Korngrößenverteilung P2 aufweist.

Dies kann beim Aufbringen der Schichten 7, 10 beim Plasmaspritzen (APS, VPS, LPPS) dadurch erfolgen, dass unterschiedliche Pulverfraktionen verwendet werden.

Die Korngrößenverteilung P1 weist für die untere Schicht 7 Korngrößen ≥ 15µm, insbesondere ≥ 25µm auf. P1min ist vorzugsweise 15µm. Vorteilhafterweise kann auch ein Wert von 25µm für P1min verwendet werden.
Der maximale Wert in der Korngrößenverteilung P1 beträgt vorzugsweise 45µm (=P1max).
Es hat sich als besonders vorteilhaft erwiesen, nicht zu kleine Pulverkörner bei der kleineren Korngrößenverteilung zu verwenden, da diese wiederum die Anbindung an das Substrat 4 verringern.
Die Korngrößenverteilung P2 weist für die äußere Schicht 10 Korngrößen bis ≤ 75µm (=P2max) auf. Vorzugsweise ist P2max = 75µm.
Der minimale Wert P2min für die Korngrößen der Korngrößenverteilung P2 beträgt vorzugsweise 45µm.
Bei der gröberen Korngrößenverteilung P2 für die äußere Schicht 10 ist es vorteilhaft nicht allzu grobe Teilchen zu verwenden, da sonst gegebenenfalls eine zu hohe Porosität entsteht.

Ebenfalls können solche Schichten 7, 10 beim PVD- oder CVD-Verfahren erzeugt werden, wobei dann die Verfahrensparameter so eingestellt werden müssen, dass sich unterschiedliche Korngrößen in den Schichten 7, 10 bilden.

Durch eine vorzugsweise durchgeführte Wärmebehandlung zur besseren Anbindung an das Substrat, insbesondere einer metallischen Schicht, 7, 10, 13, wachsen alle Körner der Schichten 7, 10, 13, so dass kein oder kaum noch ein Unterschied mehr feststellbar ist.

Soll die äußere Oberfläche der Schicht 13 glatter sein, so kann noch eine dritte Schicht, beispielsweise mit der Korngrößenverteilung P1, aufgebracht werden.

In Figur 2 sind schematisch vorteilhafte Häufigkeitsverteilungen für die Korngrößenverteilungen P1 und P2 dargestellt. Die Pulverfraktion P1, die beispielsweise für die innere Schicht 7 verwendet wird, ist bspw. im unteren Bereich und oberen Bereich abgesiebt worden. Daher ist gestrichelt angedeutet der Verlauf ohne die Absiebung von feinem bzw. groben Pulverteilchen. Entsprechend ist die gröbere Korngrößenverteilung P2 hergestellt und hier graphisch dargestellt.

Zwischen den zwei Korngrößenverteilungen P1, P2 kann ein Abstand d vorhanden sein, d.h. das größte Pulverkorn P1max der kleineren Korngrößenverteilung P1 ist kleiner als die kleinste Korngröße P2min der gröberen Korngrößenverteilung P2.

Vorzugsweise werden die Korngrößenverteilung P1, P2 so eingestellt, dass der Abstand d null ist (Fig. 3).

Weitere Beispiele für die Häufigkeitsverteilung d sind in den Figuren 4, 5 und 6 dargestellt.

In Figur 4 ist der maximale P1max der Korngrößenverteilung P1 kleiner als der minimale Wert P2min der Korngrößenverteilung P2. Beide Korngrößenverteilungen P1, P2 sind nicht abgesiebt.

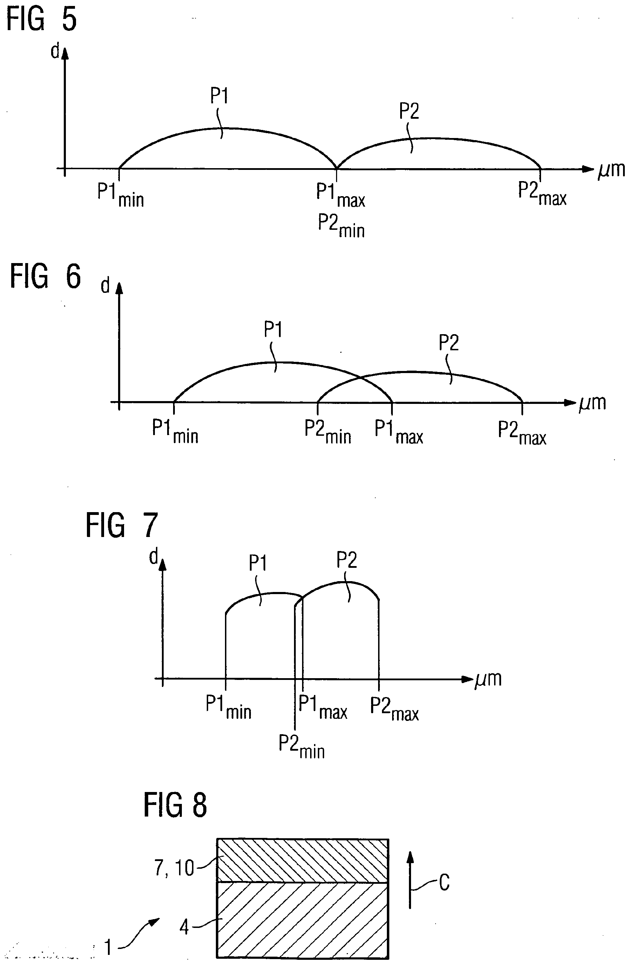

In Figur 5 sind ausgehend von Figur 4 die Werte P1max und P2min gleich groß.

In den Figuren 6, 7 überlappen sich die Verteilungen der Korngrößenverteilungen P1 und P2, d.h. P1max größer P2min, insbesondere aber P1max ≤ 1.2*P2min, insbesondere aber P1max ≤ 1.1*P2min.

Eine Korngrößenverteilung (z.B. P1 in Fig. 6) ist kleiner als eine andere Korngrößenverteilung (z.B. P2 in Fig. 6) wenn der mittlere Korndurchmesser der einen Korngrößenverteilung kleiner ist als der mittlere Korndurchmesser der anderen Korngrößenverteilung. Der mittlere Korndurchmesser einer Korngrößenverteilung ergibt sich aus der Häufigkeit der auftretenden Korngrößen in der Korngrößenverteilung.
Geringe Überschneidungen von P1max und P2min von 10% bis 15% sind also denkbar.

Beim Plasmaspritzen können sich die Korngrößen der verwendeten Korngrößenverteilung P1, P2 für die Schicht 7, 10 verändern. Jedoch ändert sich nichts oder nur kaum an der relativen Zuordnung zueinander, d.h. die Korngrößenverteilungen der Korngrößen der Schicht 7, 10 sind nur auf der X-Achse verschoben.

Auch beim HVOF-Beschichten wird eine äußere Schicht mit einer gröberen Korngrößenverteilung erstellt, da das HVOF im allgemeinen sehr glatte Oberflächen erzeugt, die dann für eine nachfolgende keramische oder metallische Beschichtung nicht rau genug ist, d. h. keine Verklammerungsmöglichkeiten anbietet, so dass eine letzte Lage mit einer größeren Korngrößenverteilung erstellt wird.

Der Übergang zwischen den Schichten 7 und 10 muss nicht diskret sein, sondern kann auch kontinuierlich erfolgen (Fig. 8), in dem bis zu einer gewissen Schichtdicke die kleinere Pulverfraktion (Korngrößenverteilung P1) verwendet wird, und dann nach und nach der Anteil der kleineren Pulverfraktion zurückgefahren wird und ein größerer Anteil der gröberen Pulverfraktion (Korngrößenverteilung P2) ergibt, hinzugemischt wird bis nur noch diese Pulverfraktion der Plasmadüse zugeführt wird.

Auch kann eine dritte Schicht zwischen innerer 7 und äußerer Schicht 10 vorhanden sein, in der ein gradueller Übergang von P1 zu P2 erfolgt, d.h. bspw. wird beim Plasmaspritzen die Zufuhr von feinerem Pulver gestoppt und nach und nach das gröbere Pulver hinzugemischt bis nur noch das gröbere Pulver P2 verwendet wird.

Nach dem Auftrag der inneren Schicht 7 oder vor dem Auftrag der äußeren Schicht 10 wird vorzugsweise keine Wärmebehandlung durchgeführt, die beispielsweise zur Verdichtung oder zur Diffusionsanbindung führt, sondern diese Wärmebehandlung findet vorzugsweise nach dem Auftragen der Schichten 7, 10 mit beiden Schichten zusammen statt.

Die Zusammensetzungen S1 - S5 für die innere Schicht 7 und/oder die äußere Schicht 10 können wie folgt sein in wt%:
S1 Co-(29-31)Ni-(27-29)Cr-(7-9)Al-(0.4-0.8)Y-(0.5-0.9)Si, insbesondere Co-30Ni-28Cr-8Al-0.6Y-0.7Si;
S2 Co-(27-29)Ni-(23-25)Cr-(9-11)Al-(0.4-0.8)Y, insbesondere Co-28Ni-24Cr-10Al-0.6Y;
S3 Ni-(9-11)Co-(22-24)Cr-(11-13)Al-(0.4-0.8)Y-(2 -3.5)Re, insbesondere Ni-10Co-23Cr-12Al-0.6Y-3Re;
S4 Ni-(11-13)Co-(20-22)Cr-(10-12)Al-(0.3-0.5)Y-(1-3)Re, insbesondere Ni-12Co-21Cr-11Al-0.4Y-2Re;
S5 Ni-(24-26)Co-(16-18)Cr-(9-11)Al-(0.3-0.5)Y-(0.8-1.8)Re, insbesondere Ni-25Co-17Cr-10Al-0.4Y-1.5Re.

Die Figur 9 zeigt beispielhaft eine Gasturbine 100 in einem Längsteilschnitt.

Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).
Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.
Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet. Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Ebenso können die Schaufeln 120, 130 Beschichtungen gegen Korrosion (MCrA1X; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1 EP 0 786 017 B1, EP 0 412 397 B1 oder EP 1 306 454 A1, die bzgl. der chemischen Zusammensetzung Teil dieser Offenbarung sein sollen. Die Beschichtungen weisen die erfindungsgemäße zumindest zweilagige Struktur auf.

Auf der MCrA1X kann noch eine Wärmedämmschicht vorhanden sein, und besteht beispielsweise aus ZrO₂ Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 10 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.
Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.
Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrA1X; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1 EP 0 786 017 B1, EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.
Auf der MCrA1X-Schicht (als Zwischenschicht oder als äußerste Schicht) bildet sich eine schützende Aluminiumoxidschicht (TGO = thermal grown oxide layer).
Die Beschichtungen weisen die erfindungsgemäße zumindest zweilagige Struktur auf.

Auf der MCrA1X kann noch eine Wärmedämmschicht vorhanden sein, die vorzugsweise die äußerste Schicht ist, und besteht beispielsweise aus ZrO₂ Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.
Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 11 zeigt eine Brennkammer 110 einer Gasturbine. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.
Jedes Hitzeschildelement 155 aus einer Legierung ist arbeitsmediumsseitig mit einer besonders hitzebeständigen Schutzschicht (MCrA1X-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrA1X: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂ Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in dem Hitzeschildelement 155 repariert. Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

## Patentansprüche

1. Verwendung von Pulvern zur Herstellung eines Schichtsystems (1)
aufweisend
ein Substrat (4) und
zumindest zwei metallische Schichten (7, 10), wobei eine äußere metallische Schicht (10) über einer inneren metallischen Schicht (7) angeordnet ist,
wobei die Korngrößenverteilungen (P1, P2) der Pulver für die Herstellung der Schichten (7, 10) unterschiedlich sind,
**dadurch gekennzeichnet,**
**dass** ein minimaler Wert (P1min) der Korngrößenverteilung (P1) ≥ 15µm beträgt,
insbesondere ≥ 2.5µm,
**dass** ein maximaler Wert (P2max) der Korngrößenverteilung (P2) 75µm beträgt und
**dass** die Korngrößenverteilung (P1) des Pulvers für die innere Schicht (7) einen maximalen Wert (P1max) aufweist,
der kleiner gleich einem minimalen Wert (P2min) der Korngrößenverteilung (P2) des Pulvers für die äußere Schicht (10) ist.

2. Verwendung nach Anspruch 1,
**dadurch gekennzeichnet, dass**
die zumindest zwei Schichten (7, 10) die gleiche chemische Zusammensetzung aufweisen.

3. Verwendung nach Anspruch 1 oder 2,
**dadurch gekennzeichnet, dass**
die Korngrößenverteilung (P1) des Pulvers für die innere Schicht (7) kleiner ist als die Korngrößenverteilung (P2) des Pulvers für die äußere Schicht (10).

4. Verwendung nach Anspruch 1,
**dadurch gekennzeichnet, dass**
der maximale Wert (P1max) der Korngrößenverteilung (P1) dem minimalen Wert (P2min) der Korngrößenverteilung (P2) entspricht.

5. Verwendung nach Anspruch 14,
**dadurch gekennzeichnet, dass**
der maximale Wert (P1max) der Korngrößenverteilung (P1) kleiner ist als der minimale Wert (P2min) der Korngrößenverteilung (P2).

6. Verwendung nach Anspruch 1, 3, 4 oder 5,
**dadurch gekennzeichnet, dass**
ein maximaler Wert (P1max) der Korngrößenverteilung (P1) 45µm beträgt.

7. Verwendung nach einem oder mehreren der vorherigen Ansprüche,
**dadurch gekennzeichnet, dass**
ein minimaler Wert (P2min) der Korngrößenverteilung (P2) 45µm beträgt.

8. Verwendung nach einem oder mehreren der vorherigen Ansprüche,
**dadurch gekennzeichnet, dass**
sich die Korngrößen innerhalb der Schichten (7, 10, 13) in Richtung von einem Substrat (4) zu einer äußeren Oberfläche (16) der Schicht (10) kontinuierlich verändern.

9. Verwendung nach einem oder mehreren der vorherigen Ansprüche,
**dadurch gekennzeichnet, dass**
das Schichtsystem nur zwei metallische Schichten (7,10) aufweist.

10. Verwendung nach Anspruch 1, 2, 3 oder 9,
**dadurch gekennzeichnet, dass**
die innere Schicht (7) dicker ausgebildet ist als die äußere Schicht (10),
insbesondere um mindestens 100% bis 200%.

11. Verwendung nach einem oder mehreren der vorherigen Ansprüche,
**dadurch gekennzeichnet, dass**
das Material der Schichten (7, 10) aus einer Legierung des Typs MCrAlX besteht.

12. Verwendung nach Anspruch 1, 8 oder 11, **dadurch gekennzeichnet, dass**
ein Substrat (4) des Schichtsystems (1) nickelbasiert ist.

13. Verwendung nach Anspruch 1, 8 oder 11, **dadurch gekennzeichnet, dass**
ein Substrat (4) des Schichtsystems (1) kobaltbasiert ist.

14. Verwendung nach einem oder mehreren der vorherigen Ansprüche,
**dadurch gekennzeichnet, dass**
auf der äußeren Schicht (10) eine keramische Schicht (19) vorhanden ist.

15. Verwendung nach einem oder mehreren der vorherigen Ansprüche,
**dadurch gekennzeichnet, dass**
nach dem Auftrag der inneren Schicht (7) oder vor dem Auftrag der äußeren Schicht (10) keine Wärmebehandlung zur Diffusionsanbindung durchgeführt wird.

16. Verwendung nach einem oder mehreren der vorherigen Ansprüche,
**dadurch gekennzeichnet, dass**
die Zusammensetzung (in wt%) für die innere Schicht (7) und/oder die äußere Schicht (10) wie folgt ist: Co-(29-31)Ni-(27-29)Cr-(7-9)Al-(0.4-0.8)Y-(0.5-0.9)Si, insbesondere Co-30Ni-28Cr-8Al-0.6Y-0.7Si, oder dass die Zusammensetzung (in wt%) für die innere Schicht (7) und/oder die äußere Schicht (10) wie folgt ist: Co-(27-29)Ni-(23-25)Cr-(9-11)Al-(0.4-0.8)Y, insbesondere Co-28Ni-24Cr-10A1-0.6Y, oder
dass die Zusammensetzung (in wt%) für die innere Schicht (7) und/oder die äußere Schicht (10) wie folgt ist: Ni-(9-11)Co-(22-24)Cr-(11-13)Al-(0.4-0.8)Y-(2-3.5)Re, insbesondere Ni-10Co-23Cr-12Al-0.6Y-3Re, oder
dass die Zusammensetzung (in wt%) für die innere Schicht (7) und/oder die äußere Schicht (10) wie folgt ist: Ni-(11-13)Co-(20-22)Cr-(10-12)Al-(0.3-0.5)Y-(1-3)Re, insbesondere Ni-12Co-21Cr-11Al-0.4Y-2Re, oder
dass die Zusammensetzung (in wt%) für die innere Schicht (7) und/oder die äußere Schicht (10) wie folgt ist: Ni-(24-26)Co-(16-18)Cr-(9-11)Al-(0.3-0.5)Y-(0.8-1.8)Re, insbesondere Ni-25Co-17Cr-10Al-0.4Y-1.5Re.

## Claims

1. Use of powders for producing a layer system (1) including
a substrate (4) and
at least two metallic layers (7, 10),
wherein an outer metallic layer (10) is arranged above an inner metallic layer (7),
wherein the grain size distributions (PI, P2) of the powders used to produce the layers (7, 10) are different,
**characterized**
**in that** a minimum value (P1min) for the grain size distribution (P1) ≥ 15 µm,
in particular ≥ 25 µm,
**in that** a maximum value (P2max) for the grain size distribution (P2) is 75 µm and
**in that** the grain size distribution (P1) of the powder for the inner layer (7) has a maximum value (P1max) which is less than or equal to a minimum value (P2min) for the grain size distribution (P2) for the powder for the outer layer (10).

2. Use according to Claim 1,
**characterized in that**
the at least two layers (7, 10) have the same chemical composition.

3. Use according to Claim 1 or 2,
**characterized in that**
the grain size distribution (P1) of the powder for the inner layer (7) is smaller than the grain size distribution (P2) of the powder for the outer layer (10).

4. Use according to Claim 1,
**characterized in that**
the maximum value (P1max) for the grain size distribution (P1) corresponds to the minimum value (P2min) for the grain size distribution (P2).

5. Use according to Claim 1,
**characterized in that**
the maximum value (P1max) for the grain size distribution (P1) is smaller than the minimum value (P2min) for the grain size distribution (P2).

6. Use according to Claim 1, 3, 4 or 5,
**characterized in that**
a maximum value (P1max) for the grain size distribution (P1) is 45 µm.

7. Use according to one or more of the preceding claims,
**characterized in that**
a minimum value (P2min) for the grain size distribution (P2) is 45 µm.

8. Use according to one or more of the preceding claims,
**characterized in that**
the grain sizes within the layers (7, 10, 13) change continuously in the direction from a substrate (4) toward an outer surface (16) of the layer (10).

9. Use according to one or more of the preceding claims,
**characterized in that**
the layer system has just two metallic layers (7, 10).

10. Use according to Claim 1, 2, 3 or 9,
**characterized in that**
the inner layer (7) is thicker than the outer layer (10),
in particular by at least 100% to 200%.

11. Use according to one or more of the preceding claims,
**characterized in that**
the material of the layers (7, 10) consists of an alloy of the MCrAlX type.

12. Use according to Claim 1, 8 or 11,
**characterized in that**
a substrate (4) of the layer system (1) is nickel-based.

13. Use according to Claim 1, 8 or 11,
**characterized in that**
a substrate (4) of the layer system (1) is cobalt-based.

14. Use according to one or more of the preceding claims,
**characterized in that**
there is a ceramic layer (19) on the outer layer (10).

15. Use according to one or more of the preceding claims,
**characterized in that**
no heat treatment for diffusion bonding is carried out after application of the inner layer (7) or before application of the outer layer (10).

16. Use according to one or more of the preceding claims,
**characterized in that**
the composition (in wt%) for the inner layer (7) and/or the outer layer (10) is as follows: Co-(29-31)Ni-(27-29)Cr-(7-9)Al-(0.4-0.8)Y-(0.5-0.9)Si, in particular Co-30Ni-28Cr-8Al-0.6Y-0.7Si, or
**in that** the composition (in wt%) for the inner layer (7) and/or the outer layer (10) is as follows: Co-(27-29)Ni-(23-25)Cr-(9-11)Al-(0.4-0.8)Y, in particular Co-28Ni-24Cr-10A1-0.6Y, or
**in that** the composition (in wt%) for the inner layer (7) and/or the outer layer (10) is as follows: Ni-(9-11)Co-(22-24)Cr-(11-13)Al-(0.4-0.8)Y-(2-3.5)Re, in particular Ni-10Co-23Cr-12Al-0.6Y-3Re, or
**in that** the composition (in wt%) for the inner layer (7) and/or the outer layer (10) is as follows: Ni-(11-13)Co-(20-22)Cr-(10-12)Al-(0.3-0.5)Y-(1-3)Re, in particular Ni-12Co-21Cr-11Al-0.4Y-2Re, or
**in that** the composition (in wt%) for the inner layer (7) and/or the outer layer (10) is as follows: Ni-(24-26)Co-(16-18)Cr-(9-11)Al-(0.3-0.5)Y-(0.8-1.8)Re, in particular Ni-25Co-17Cr-10Al-0.4Y-1.5Re.

## Revendications

1. Utilisation de poudres pour la production d'un système (1) de couches
ayant
un substrat (4) et
au moins deux couches (7, 10) métalliques,
une couche (10) métallique extérieure étant disposée sur une couche (7) métallique intérieure,
dans laquelle les répartitions (P1, P2) granulométriques des poudres pour la production des couches (7, 10) sont différentes,
**caractérisée**
**en ce qu'**une valeur (P1min minimum de la répartition (P1) granulométrique est ≥ 15 µm,
notamment ≥ 25 µm,
**en ce qu'**une valeur (P2max) maximum de la répartition (P2) granulométrique est supérieure à 75 µm,
**en ce que** la répartition (P1) granulométrique de la poudre pour la couche (7) intérieure a une valeur (P1max) maximum,
qui est plus petite ou égale à une valeur (P2min) minimum de la répartition (P2) granulométrique de la poudre pour la couche (10) extérieure.

2. Utilisation suivant la revendication 1,
**caractérisée**
**en ce que** les au moins deux couches (7, 10) ont la même composition chimique.

3. Utilisation suivant la revendication 1 ou 2,
**caractérisée**
**en ce que** la répartition (P1) granulométrique de la poudre pour la couche (7) intérieure est plus petite que la répartition (P2) granulométrique de la poudre pour la couche (10) extérieure.

4. Utilisation suivant la revendication 1,
**caractérisée**
**en ce que** la valeur (P1max) maximum de la répartition (P1) granulométrique correspond à la valeur (P2min) minimum de la répartition (P2) granulométrique.

5. Utilisation suivant la revendication 1,
**caractérisée**
**en ce que** la valeur (P1max) maximum de la répartition (P1) granulométrique est plus petite que la valeur (P2min) minimum de la répartition (P2) granulométrique.

6. Utilisation suivant la revendication 1, 3, 4 ou 5,
**caractérisée**
**en ce qu'**une valeur (P1max) maximum de la répartition (P1) granulométrique est de 45 µm.

7. Utilisation suivant l'une ou plusieurs des revendications précédentes,
**caractérisée**
**en ce qu'**une valeur (P2min) minimum de la répartition (P2) granulométrique est de 45 µm.

8. Utilisation suivant l'une ou plusieurs des revendications précédentes,
**caractérisée**
**en ce que** les granulométries se modifient d'une manière continue au sein des couches (7, 10, 13) dans le sens allant d'un substrat (4) à une surface (16) extérieure de la couche (10).

9. Utilisation suivant l'une ou plusieurs des revendications précédentes,
**caractérisée**
**en ce que** le système de couches a deux couches (7, 10) métalliques.

10. Utilisation suivant la revendication 1, 2, 3 ou 9,
**caractérisée**
**en ce que** la couche (7) intérieure est plus épaisse que la couche (10) extérieure,
notamment d'au moins 100% à 200%.

11. Utilisation suivant l'une ou plusieurs des revendications précédentes,
**caractérisée**
**en ce que** le matériau des couches (7, 10) est constitué d'un alliage du type MCrAlX.

12. Utilisation suivant la revendication 1, 8 ou 11,
**caractérisée**
**en ce qu'**un substrat (4) du système (1) de couche est à base de nickel.

13. Utilisation suivant la revendication 1, 8 ou 11,
**caractérisée**
**en ce qu'**un substrat (4) du système (1) de couche est à base de cobalt.

14. Utilisation suivant l'une ou plusieurs des revendications précédentes,
**caractérisée**
**en ce qu'**une couche (19) en céramique est présente sur la couche (10) extérieure.

15. Utilisation suivant l'une ou plusieurs des revendications précédentes,
**caractérisée**
**en ce que**, après le dépôt de la couche (7) intérieure ou avant le dépôt de la couche (10) extérieure, on n'effectue pas de traitement thermique pour la liaison par diffusion.

16. Utilisation suivant l'une ou plusieurs des revendications précédentes,
**caractérisée**
**en ce que** la composition (en % en poids) de la couche (7) intérieure et/ou de la couche (10) extérieure est la suivante : Co-(29-31)Ni-(27-29)Cr(7-9)Al-(0,4-0,8)Y-(0,5-0,9)Si,
notamment Co-30Ni-28Cr-8A1-0,6Y-0,7Si, ou
**en ce que** la composition (en % en poids) de la couche (7) intérieure et/ou de la couche (10) extérieure est la suivante : Co-(27-29)Ni-(23-25)Cr-(9-11)Al-(0,4-0,8)Y, notamment Co-28Ni-24Cr-10Al-0,6Y, ou
**en ce que** la composition (en % en poids) de la couche (7) intérieure et/ou de la couche (10) extérieure est la suivante : Ni-(9-11)Co-(22-24)Cr-(11-13)Al-(0,4-0,8)Y-(2-3,5)Re,
notamment Ni-10Co-23Cr-12Al-0,6Y-3Re, ou
**en ce que** la composition (en % en poids) de la couche (7) intérieure et/ou de la couche (10) extérieure est la suivante : Ni-(11-13)Co-(20-22)Cr-(10-12)Al-(0,3-0,5)Y-(1-3)Re, notamment Ni-12Co-21Cr-11A1-0,4Y-2Re, ou
**en ce que** la composition (en % en poids) de la couche (7) intérieure et/ou de la couche (10) extérieure est la suivante : Ni-(24-26)Co-(16-18)Cr-(9-11)Al-(0,3-0,5)Y-(0,8-1,8)Re, notamment Ni-25Co-17Cr-10A1-0,4Y-1,5Re.
